# EUROPEAN PATENT SPECIFICATION

(11) **EP 1 338 534 B1**
(45) Date of publication and mention of the grant of the patent: **09.02.2005**
(21) Application number: 03075815.5
(22) Date of filing: 09.04.1997
(51) Int. Cl.: B65G 25/00, B65G 25/06

(54) **Drive module for a reciprocating slat conveyor**
Antriebsmodul für einen hin- und hergehenden Lattenförderer
Module d'actionnement pour convoyeur à lattes à mouvement de va-et-vient

(30) Priority: 10.04.1996 US 15235 P
(43) Date of publication of application: 27.08.2003
(62) Divisional of application: 97921129.9
(73) Proprietor: Foster, Raymond Keith, Madras Oregon 97741 (US)
(72) Inventor: Foster, Raymond Keith, Madras Oregon 97741 (US)
(74) Representative: Hoorweg, Petrus Nicolaas

(56) References cited:
- US-A- 5 383 548
- US-A- 5 427 229

## Description

### TECHNICAL FIELD

The present invention relates to continuously advancing reciprocating slat conveyors. More particularly, it relates to a drive module for such conveyors.

### BACKGROUND OF THE INVENTION

Reciprocating slat conveyors comprise a plurality of side by side conveyor slats that are driven in one direction for advancing a load and are retracted in the opposite direction. A reciprocating slat conveyor is divided into both "sets" and "groups" of conveyor slats. The slats of each "set" move together. Each "group" includes one slat from each "set." In some slat conveyors, all slats are driven in unison, in the conveying direction, and are then retracted sequentially, one set at a time. There have been attempts to drive a majority of the conveyor slat sets in the conveying direction while simultaneously retracting the remaining conveyor slat sets, to provide a conveyor that will continuously move the load on the conveyor. These conveyors are herein referred to as continuously advancing, reciprocating slat conveyors. Examples of continuously advancing, reciprocating slat conveyors, existing in the patent literature, are disclosed by the following patents: Netherlands Patent No. 67/06657, granted Nov. 13, 1968, to Cornelis Deyer; U.S. Pat. No. 3,534,875, granted Oct. 20, 1970, to Olof A. Hallstrom; U.S. Pat No. 4,144,963, granted Mar. 20, 1979, to Olof A. Hallstrom; U.S. Pat. No. 4,580,678, granted Apr. 8, 1986, to Raymond K. Foster; U.S.

Pat. No. 4,793,468, granted Dec. 27, 1988, to James M. Hamilton and Phillip J. Sweet; U.S. Pat. No. 5,063,981, granted Nov. 12, 1991, to Arvo Jonkka; U.S. Pat. No. 5,340,264, granted Aug. 23, 1994, to Manfred W. Quaeck and U.S. Pat. No. 5,469,603, granted Nov. 28, 1995, to Jimmy R. Stover. These patents should be carefully considered for the purpose of putting the present invention into proper perspective relative to the prior art.

There is a need for a drive module for a continuously advancing, reciprocating slat conveyor, and it is an object of the invention to provide such a drive module.

### DISCLOSURE OF THE INVENTION

The drive module for a reciprocating slat conveyor of the present invention comprises a pair of longitudinally spaced apart end frame members, each extending transversely of the conveyor. The center frame member is positioned longitudinally between the two end frame members. It also extends transversely of the conveyor. A first pair of piston-cylinder drive units are provided to extend longitudinally of the conveyor, between a first said end frame member and said center frame member. These drive units each have a fixed end portion connected to the center frame member and a movable portion between the first end frame member and the center frame member. They also can have a second and opposite fixed end portion that is connected to the first end frame member. A second pair of piston-cylinder drive units are provided to extend longitudinally of the conveyor, between the center frame member and the second end frame member. These drive units each have a fixed end portion that is connected to the second end frame member and a movable portion that is located between the first end frame member and the center frame member. This pair of drive units may each also have a second fixed opposite end portion that is connected to the center frame member. Four transverse drive beams are provided, one for each drive unit. Two of the transverse drive beams are positioned between the first end frame member and the center frame member. The remaining two of the transverse drive beams are positioned between the center frame member and the second end frame member. Each transverse drive beam is connected to the movable portion of a separate related one of the drive units.

In the preferred embodiment, each drive unit has two fixed opposite end portions and a movable center portion. One of the fixed opposite end portions is connected to one of the end frame members. The other is connected to the center frame member.

According to an aspect of the invention, the center frame member includes an upper portion and a plurality of bearing supports connected to said upper portion. The bearing supports are beam members that extend longitudinally of the conveyor. In use, at least one bearing is connected to each bearing support. Each bearing support and bearing on it receive and support a portion of a reciprocating conveyor slat.

Preferably, the center frame member is in the nature of an upwardly opening channel. Strengthening members are provided within the channel. These members extend transversely of the channel and longitudinally of the conveyor. These strengthening members are provided where the drive units are connected to the center frame member. Preferably, the end frame members are of a length to fit substantially between a pair of longitudinally extending, laterally spaced apart center frame beams. The center frame member is adapted to set down on the center frame beams and to extend laterally outwardly from them, substantially to the side boundaries of the conveyor. The end frame members have upper portions which in use project above the center frame beams. Each upper portion has an upper surface. The center frame member has an upper surface at substantially the same level as the upper surfaces of the end frame members. Longitudinally extending support and guide beams for the conveyor slats are connected to the upper surfaces of the other end frame members and the upper surfaces of the center frame member. Windows are formed between ends of support and guide beams which are connected to each end frame member, and ends of support and guide beams which are connected to the center frame member. Each of these windows provide access to two of the drive beams. Within these windows, conveyor slat sets are connected to the drive beams, one slat set per drive beam.

These and other advantages, objects and features will become apparent from the following best mode description, the accompanying drawings, and the claims, which are all incorporated herein as part of the disclosure of the invention.

### BRIEF DESCRIPTION OF THE DRAWINGS

In the drawings, like element designations refer to like parts throughout the several views, and:
FIG. 1 is a pictorial view of a trailer that includes a reciprocating slat conveyor, shown in the process of using the conveyor to discharge its load;
FIG. 2 is a top plan diagram of a conveyor which includes two groups and four sets of conveyor slats, such view showing the sets of slats staggered, and showing all of the slats moving together, away from a start position and towards an advanced position;
FIG. 3 is a view like FIG. 2, but showing the slats advanced in position a small amount from their positions in FIG. 2;
FIG. 4 is a view like FIGS. 2 and 3, but showing the set "1" slats at their advanced position and starting to retract towards their retracted position, and showing the remaining slat sets still advancing;
FIG. 5 is a view like FIGS. 2-4, but showing the set "1" slats after they have reached their retracted position and have again started advancing, and showing them advancing with the other slat sets;
FIG. 6 is a view like FIGS. 2-5, but showing the set "2" slats at their advanced position and starting to retract, and showing the other slat sets still advancing;
FIG. 7 is a view like FIGS. 2-6, but showing the set "3" slats at their advanced position and starting to retract, and showing the other slat sets still advancing;
FIG. 8 is a view like FIGS. 2-7, but showing the set "4" slats at their advanced position and starting to retract, and showing the other slat sets still advancing;
FIG. 9 is a cross-sectional view showing a pair of adjacent conveyor slats, their support beams and bearings, with one of the slats in the process of being moved downwardly into position adjacent the other slat;
FIG. 10 is an exploded pictorial view of the drive components and some of the control components, such view showing the transverse drive beams, some conveyor slats, some conveyor slat support beams, and some bearings spaced above a conveyor frame, and showing the drive units, control valves for the drive units and position sensors spaced below the conveyor frame;
FIG. 11 is an enlarged scale view of a preferred embodiment of the conveyor frame, such view being taken from above and looking towards one end and one side of the conveyor frame;
FIG. 12 is a pictorial view looking upwardly towards the bottom of a preferred embodiment of a drive assembly, minus the transverse drive beams, such view showing two drive units mounted and two drive units in a spaced relationship from their mounted positions;
FIG. 13 is a top plan view of the drive assembly;
FIG. 14 is a split side elevational view of the drive assembly shown in FIG. 13;
FIG. 15 is a fragmentary sectional view taken substantially along line 15--15 of FIG. 14, such view showing a pair of laterally spaced apart mainframe beams;

### BEST MODE FOR CARRYING OUT THE INVENTION

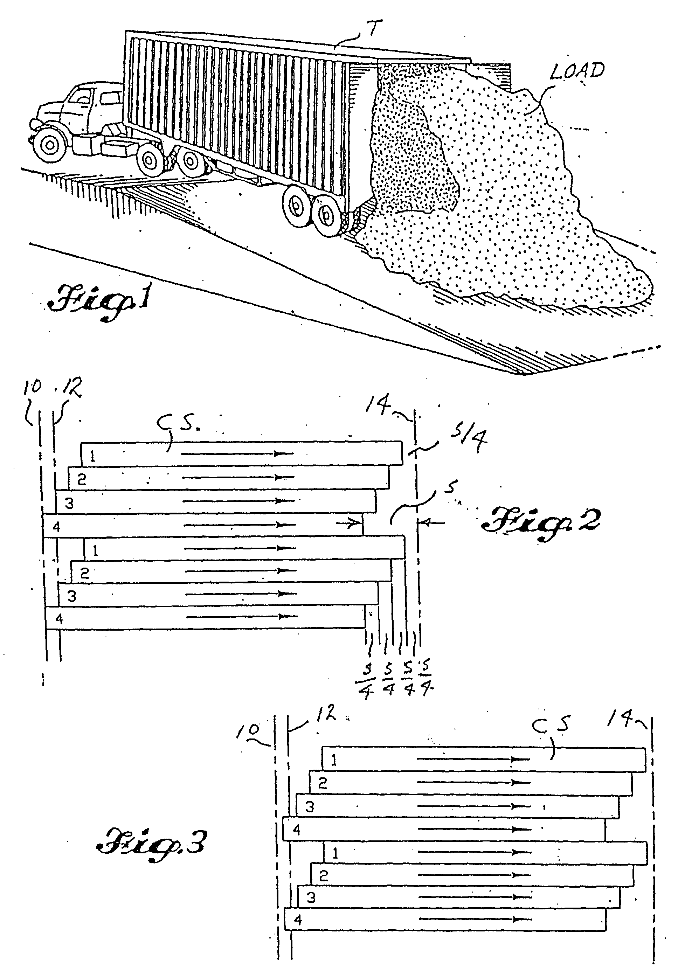

FIG. 1 shows a load of bulk material being unloaded from a trailer T by use of a reciprocating slat conveyor within the trailer T. This is one use of the reciprocating slat conveyor of the present invention. Other uses are in stationary installations, e.g. as disclosed in U.S. Pat. No. 4,508,211, granted Apr. 2, 1985, to Raymond K. Foster, and in the aforementioned U.S. Pat. Nos. 5,340,264 and 5,469,603.

The conveyor must include at least three slat "sets." However, four slat "sets" are preferred. FIGS. 2-8 illustrate the desired pattern of conveyor slat movement in a four slat conveyor. These diagrams illustrate four slat sets, designated "1," "2," "3" and "4," and two "groups." The conveyor must include at least one "group" but the number of groups is a variable. Each "group" includes one slat from each "set." In other words, each group includes one set "1" slat, one set "2" slat, one set "3" slat, and one set "4" slat, in that order. A typical conveyor will include five groups (twenty slats) or six groups (twenty-four slats). The length and width of the slats are variables.

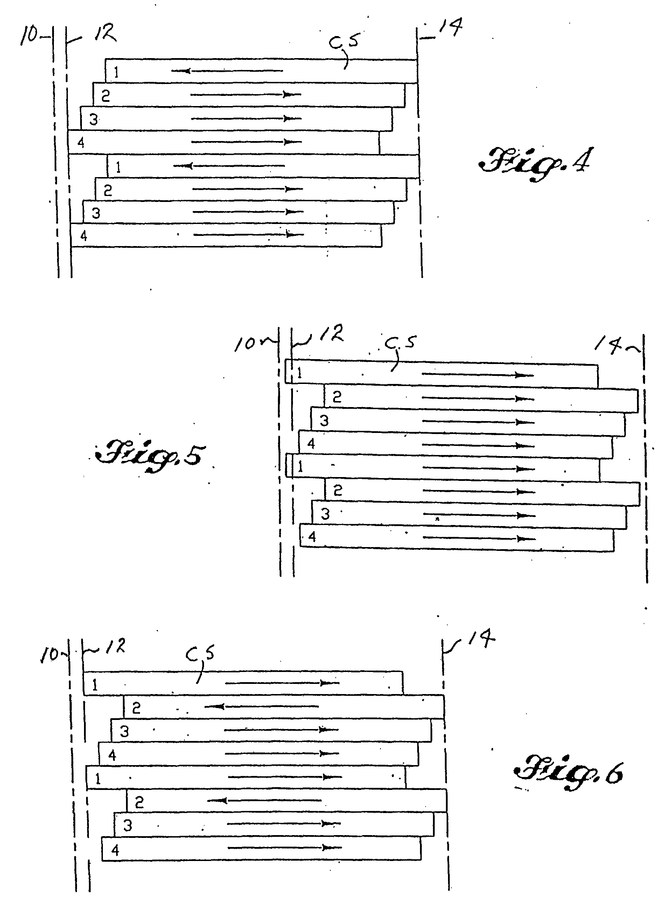

FIG. 2 shows the desired stagger pattern of the slats. The slats of slat set "4" are shown in a fully retracted position, back against retract line 10. The distances between the forward end of a slat set "4" slat and an advanced line 14 is equal to the stroke lengths. This stroke length S is shown to be divided into four parts S/4. At the rear of the pattern, a third line 12 is shown spaced forwardly from retract line 10 by the amount S/4. FIG. 2 shows all of the slats moving together towards the advanced position 14. In FIG. 2, the set "4" slats are just starting to move. FIG. 3 shows the slats moved forwardly from their position in FIG. 2 by a distance S/8. All of the slats are still moving together towards the advanced position 14. Movement of the slats from the retracted or start position 10 to the advanced position 14 is movement in the conveying direction. Movement in the opposite direction is a "return," "retracting" or "retract" movement.

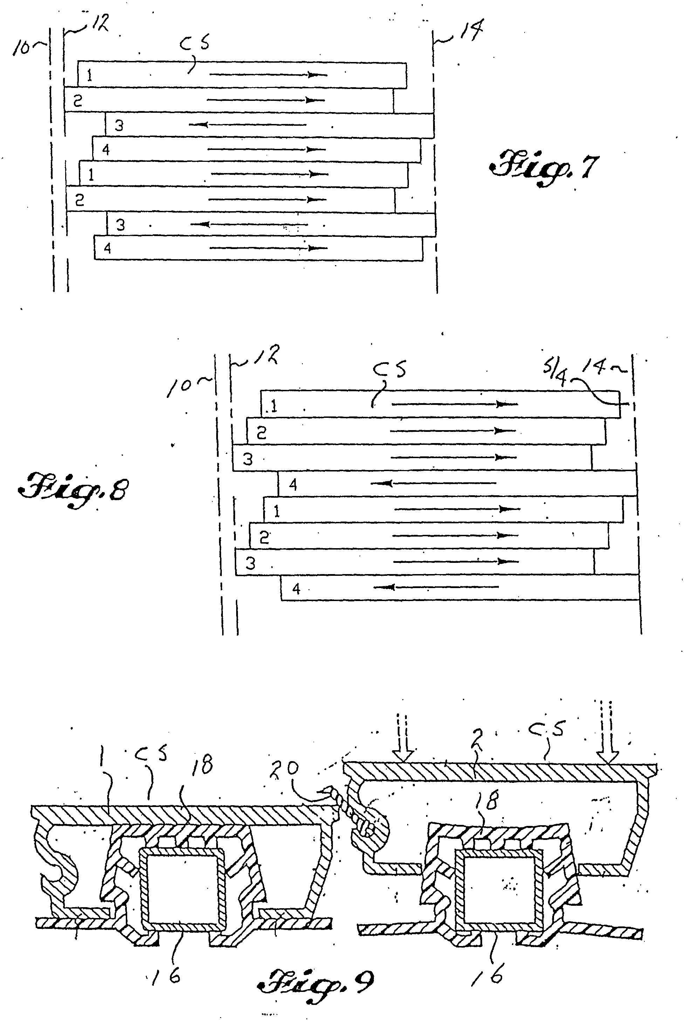

FIG. 4 shows the positions of the slats when the set "1" slats have reached the advanced position 14 and have just started to return. At this time, the set "4" slats are the farthest to the rear and their rear ends are at line 12. FIG. 5 shows the slats moved forward from their FIG. 4 positions an amount equal to S/8. At this time, all of the slats are moving together towards the advanced position 14. FIG. 6 shows the set "2" slats at the advanced position and just starting to return, while the remaining slats are advancing. FIG. 7 shows the set "3" slats at the advanced position 14 and just starting to return while the other slats are advancing. FIG. 8 shows the set "4" slats at the advanced position 14 and just starting to return while the other slats are advancing.

As can be seen from FIGS. 2-8, for a distance equal to approximately S/4, all of the slats are moving together in the conveying direction. As will be appreciated, the stagger distances will not and cannot always be exactly S/4. As will hereinafter be explained, the retracting slats move much faster than the advancing slats but it still takes some time for them to retract. As they retract, there is some forward movement of the advancing slats. FIG. 8 shows the forward end of the set "1" slats spaced about S/4 from advanced line 14 at the start of retraction of the set "4" slats. FIG. 2 shows about the same spacing S/4 at the forward ends of the set "1" slats when the set "4" slats are back against the retract line 10. However, the actual spacing at the forward ends of the set "1" slats must be and is larger in the FIG. 8 position than it is in the FIG. 2 position.

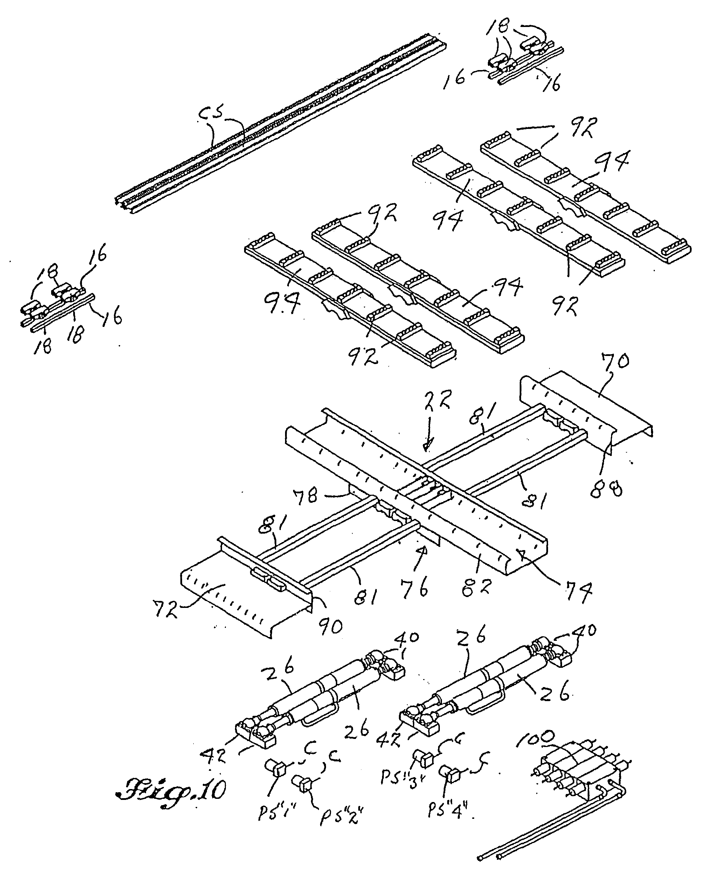

As is known in the art, the slats are mounted for reciprocation by longitudinal support and guide beams 16 and by plastic bearings 18 that are spaced apart along the beams 16. It is customary to provide a seal member 20 that is carried by one of the slats which makes sealing contact with the adjacent side surface of the adjoining slat. FIG. 9 shows seal member 20 carried by slat 2 and in sliding sealing contact with slat 1. FIG. 9 also shows a bearing 18 positioned on a guide beam 16 and a slat 1 positioned on the bearing 18. It also shows a second bearing 18 positioned on a guide beam 16 and a slat 2 in the process of being snap-fitted down onto the bearing 18. The construction and arrangement of the guide beams 16, the bearings 18 and the conveyor slats are disclosed by U.S. Pat. No. 4,858,748, granted Aug. 22, 1989, to Raymond K. Foster, and also by U.S. Pat. No. 4,896,761, granted Jan. 30, 1990, also to Raymond K. Foster.

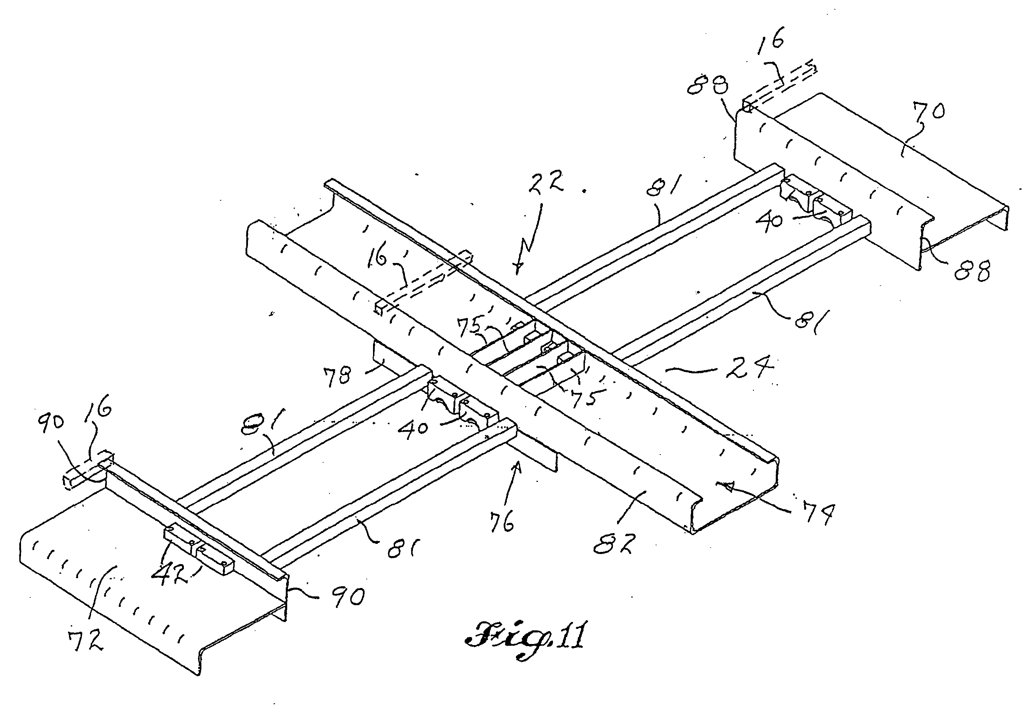

FIGS. 10-15 show a preferred drive assembly 22 that is basically characterized by a drive assembly frame 24 and a plurality of piston-cylinder drive units 26, one for each slat set. In preferred form, the drive units 26 each comprises a pair of opposite end portions that are both mounted to the frame 24 and a movable central portion which reciprocates back and forth along the stationary portions.

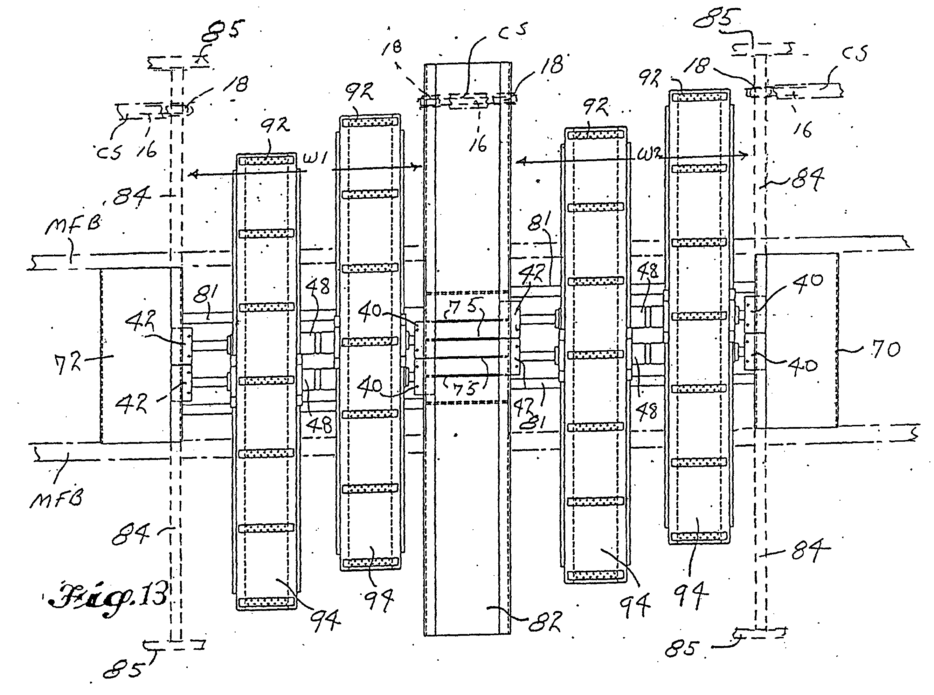

Referring to FIGS. 10-14, the drive module frame 24 comprises a pair of end frame members 70, 72 and a center frame member 74. The end members 70, 72 may be of a length to fit between a pair of laterally spaced apart main frame beams MFB (FIGS. 13 and 15). The center member 74 may include a lower portion 76 that includes lateral members 78, 80 that are substantially equal in length to the end members 70, 72. These lateral members 78, 80 also fit laterally between the main frame beams MFB. Member 74 includes an upper portion 82 that may extend substantially the full width of the conveyor frame. Upper portion 82 is in the form of a lipped channel 82. Longitudinal frame members 81 extend between the end frame members 70, 72 and the center frame member 74.

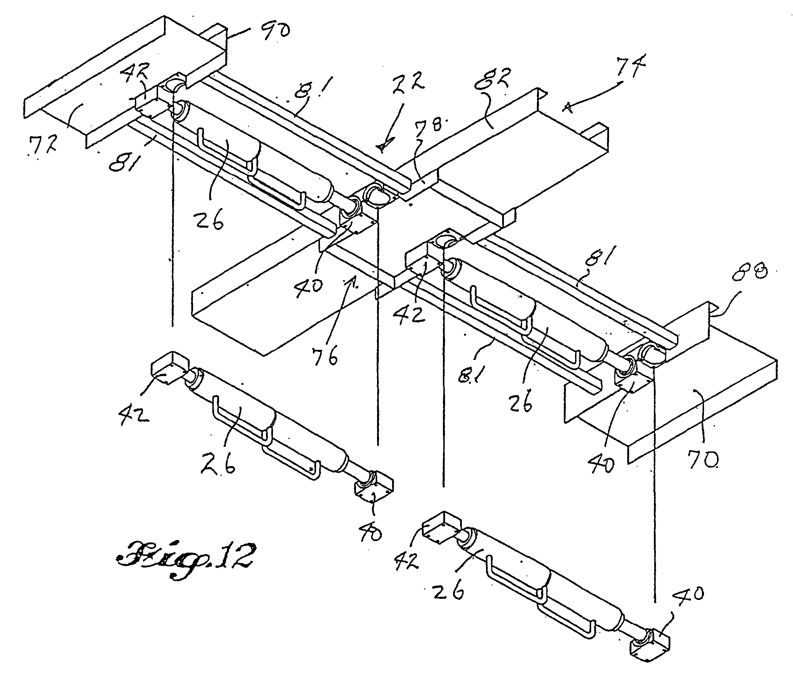

The main frame beams MFB are shown in broken lines in FIG. 13. Also, cross-sill members 84 are shown in broken lines. The end frame members 70, 72 include portions 88, 90 which project upwardly above the main frame beams MFB a distance substantially equal to the height of the cross-sill members 84. The cross-sill members 84 set down on top of and are connected to the main frame beams MFB. They also set down on and are connected to the tops of side frame members 85. At their inner ends, the cross-sill members 84 may be butt welded to the end member portions 88, 90. In FIGS. 11 and 13, fragments of a support and guide beam 16 are shown in broken line. In FIG. 13, four of the bearings 18 are shown positioned on the guide beam sections 16. There is also a fragmentary broken line showing of a conveyor slat CS riding on the bearings 18. Conveyor slat CS is connected to a connector 92 that is connected to a transverse drive beam 94, also sometimes referred to as a cross drive 94. As is known in the art, a separate cross drive 94 is connected to each drive unit 26. This is usually done by use of clamps, as disclosed in U.S. Pat. No. 4,793,469, granted Dec. 27, 1988, to Raymond K. Foster. Each cross drive 94 is connected to one set of the conveyor slats CS by use of the connectors 92. This is well disclosed in the aforementioned U.S. Pat. No. 4,748,894, for example. The fixed portions of the ball blocks 40, 42 are integrated into the end frame members 70, 72 in the manner disclosed by the aforementioned U.S. Pat. No. 5,390,781, for example. The fixed portions of the inner ball blocks 40, 42 are integrated into the center frame member 74 in substantially the same way. Center frame member 74 is preferably generally in the shape of an upwardly opening channel, as shown in FIG. 11. It is provided with internal strengthening members reinforcement plates 75. These plates 75 are vertically disposed and they extend transversely of the frame member 74, and longitudinally of the conveyor. Their ends are connected to sidewall portions of the lip channel 82, generally at the ends of the strengthening plates 75.

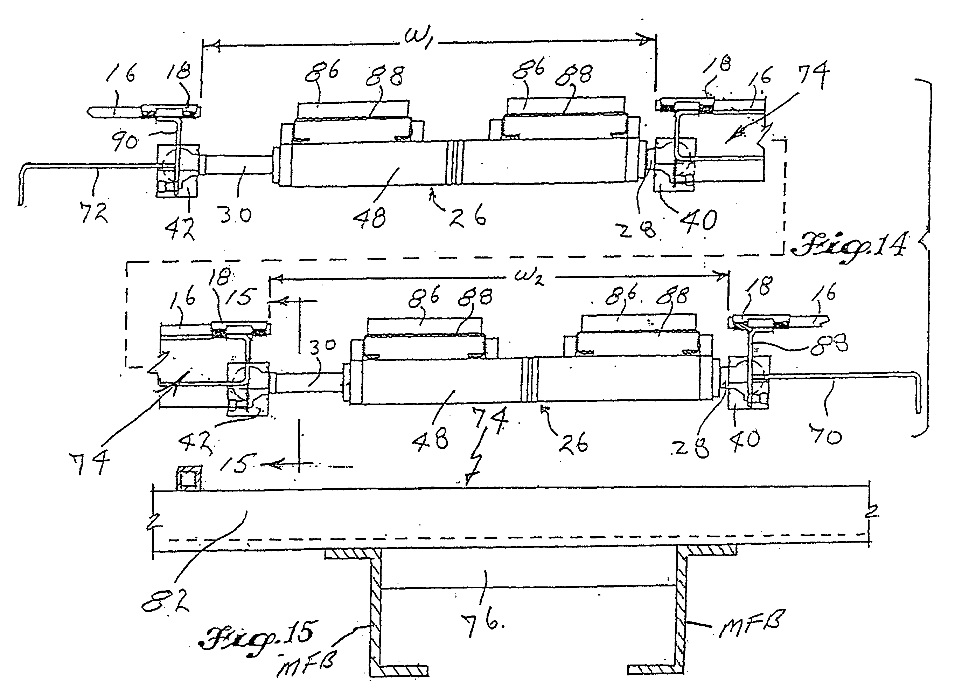

As shown by FIG. 14, windows in the conveyor main frame W1, W2 are formed on opposite sides of the transverse frame member 74. Owing to the construction of the drive assembly frame, the windows W1, W2 are relatively short. Two transverse drive beams 94 reciprocate back and forth in each window W1, W2. The end members 70, 72, the cross-sills 84 and the guide beams 16 provide reinforcement at the outer ends of the windows W1, W2. The transverse beam 74 and its guide beam segments 16 provide reinforcement at the inner ends of the windows W1, W2. Within the windows W1, W2, the loads imposed on the conveyor slats are picked up by the drive units 26 and transmitted to the frame members 70, 72, 74, and from such frame members to the main frame beams MFB. The drive units 26 are in the nature of structural beams capable of carrying bending moments, more specifically, the downward forces imposed on the conveyor slats CS are transmitted by the conveyor slats CS to the transverse drive beams 94, and from the drive beams 94 to the movable center portions of the drive units 26. They are then transmitted by the movable center portions of the drive units 26 to the end portions of the drive units 26 and from such end portions to the frame members 70, 72, 74. FIG. 13 shows a particular pattern of the transverse drive beams 94 connected to the cylinder barrels 48 of the drive units 26. However, it is to be understood that this pattern can change. Any one of the beams 94 can be clamped to any one of the drive units 26. The resulting stagger will determine the order of operation of the drive units. In FIG. 13, the pattern of the beams 94 on the drive units 26 results in the far right beam 94 and the top drive unit 26 on the right being connected to the set "1" slats. The beam 94 that is second from the left and the upper drive unit 26 on the left are connected to the set "2" slats. The beam 94 second from the right and the lower drive unit 26 on the right are connected to the set "3" slats. The beam 94 on the left and the lower drive unit 26 on the left are connected to the set "4" slats.

## Claims

1. A drive module (22) for a reciprocating slat conveyor, comprising:
a pair of longitudinally spaced apart end frame members (70,72), each extending transversely of the conveyor;
a center frame member (74) positioned longitudinally between the two end frame members (70,72), and extending transversely of the conveyor;
a first pair of piston-cylinder drive units (26), extending longitudinally of the conveyor, between a first said end frame member (70) and said center frame member (74), said drive units (26) each have a fixed end portion connected to the center frame member (74) and a movable portion between the first end frame member (70) and the center frame member (74);
a second pair of piston-cylinder drive units (26), extending longitudinally of the conveyor between the center frame member (74) and the second end frame member (72), said drive units (26), each having a fixed end portion connected to said second end frame member (72) and a movable portion between the second end frame member (72) and the center frame member (74);
four transverse drive beams (94), one for each drive unit, with two of said transverse drive beams being positioned between the first end frame member (70) and the center frame member (74), and with the remaining two of said transverse drive beams being positioned between the center frame member (74) and the second end frame member (72); and
each said transverse drive beam (94) being connected to the movable portion of a separate related one of the drive units (26).

2. A drive module (22) according to claim 1, wherein each drive unit (26) has two fixed opposite end portions and a movable center portion, with one of said fixed opposite end portions being connected to a said end frame member (70) and the other being connected to the center frame member (74).

3. A drive module according to claim 1, wherein the center frame member (74) includes an upper portion (82) and a plurality of bearing supports connected to said upper portion, said bearing supports being beam members that extend longitudinally of the conveyor, whereby in use at least one bearing is connected to each bearing support and each bearing support and bearing receive and support a portion of a reciprocating conveyor slat (CS).

4. A drive module (22)according to claim 3, wherein the center frame member (74) is in the nature of an upwardly opening channel (82).

5. A drive module (22) according to claim 4, comprising strengthening members (75) within the channel (82), extending transversely of the channel (82) and longitudinally of the conveyor, said strengthening members being where the drive units (26)are connected to said center frame member.

6. A drive module (22) according to claim 1, wherein the end frame members (70,72) are of a length to fit substantially between a pair of longitudinally extending, laterally spaced apart center frame beams (MFB), and wherein the center frame member (74)is adapted to set down on the center frame beams (MFB) and to extend laterally outwardly from them, substantially to the side boundaries of the conveyor.

7. A drive module (22) according to claim 6, wherein the end frame members (70,92) have upper portions (88,90) which in use project above the center frame beams (MFB), each upper portion having an upper surface, and wherein said center frame member (74) has an upper surface at substantially the same level as the upper surfaces of the end frame members (70,72), and wherein longitudinally extending support and guide beams (16) for conveyor slats (CS) are connected to the upper surfaces of the end frame members (90,72) and the upper surface of the center frame member (94).

8. A drive module (22) according to claim 7, wherein windows (W1,W2) are formed between ends of support and guide beams (16) which are connected to each end frame member (70,72) and ends of support and guide beams which are connected to the center frame member (74), each of these windows (W1, W2) providing access from above to two of the drive beams (94).

## Patentansprüche

1. Antriebsmodul (22) für einen sich hin und her bewegenden Lattenförderer, der aufweist:
ein Paar in Längsrichtung beabstandeter Endrahmenbauteile (70, 72), von denen sich jedes in Querrichtung des Förderers erstreckt;
ein Zentralrahmenbauteil (74), das in Längsrichtung zwischen den beiden Endrahmenbauteilen (70, 72) positioniert ist und sich in Querrichtung des Förderers erstreckt;
ein erstes Paar Kolben Zylinder-Antriebseinheiten (26), die sich in Längsrichtung des Förderers zwischen einem ersten der Endrahmenbauteile (70) und dem Zentralrahmenbauteil (74) erstrecken, wobei die Antriebseinheiten (26) jeweils einen fixierten Endabschnitt, der mit dem Zentralrahmenbauteil (74) verbunden ist, und einen bewegbaren Abschnitt zwischen dem ersten Endrahmenbauteil (70) und dem Zentralrahmenbauteil (74) aufweisen;
ein zweites Paar Kolben-Zylinder-Antriebseinheiten (26), die sich in Längsrichtung des Förderers zwischen dem Zentralrahmenbauteil (74) und dem zweiten Endrahmenbauteil (72) erstrecken, wobei die Antriebseinheiten (26) jeweils einen fixierten Endabschnitt, der mit dem zweiten Endrahmenbauteil (72) verbunden ist, und einen bewegbaren Abschnitt zwischen dem zweiten Endrahmenbauteil (72) und dem Zentralrahmenbauteil (74) aufweisen;
vier Querantriebsbalken (94), einen für jede Antriebseinheit, wobei zwei der Querantriebsbalken zwischen dem ersten Endrahmenbauteil (70) und dem Zentralrahmenbauteil (74) positioniert sind und wobei die verbleibenden zwei der Querantriebsbalken zwischen dem Zentralrahmenbauteil (74) und dem zweiten Endrahmenbauteil (72) positioniert sind; und
wobei jeder Querantriebsbalken (94) mit dem bewegbaren Abschnitt einer separaten zugehörigen Antriebseinheit der Antriebseinheiten (26) verbunden ist.

2. Antriebsmodul (22) gemäß Anspruch 1, bei dem jede Antriebseinheit (26) zwei fixierte gegenüberliegende Endabschnitte und einen bewegbaren zentralen Abschnitt aufweist, wobei einer der fixierten gegenüberliegenden Endabschnitte mit einem Endrahmenbauteil (70) verbunden ist und der andere mit dem Zentralrahmenbauteil (74) verbunden ist.

3. Antriebsmodul gemäß Anspruch 1, bei dem das Zentralrahmenbauteil (74) einen oberen Abschnitt (82) und eine Mehrzahl an Auflager-Träger, die mit dem oberen Abschnitt verbunden sind, aufweist, wobei die Auflager-Träger Balkenbauteile sind, die sich in Längsrichtung des Förderers erstrecken, wobei im Einsatz mit jedem Auflager-Träger mindestens ein auflagernder Teil verbunden ist und jeder Auflager-Träger und auflagernder Teil einen Abschnitt einer sich hin und her bewegenden Förderlatte (CS) aufnehmen und tragen.

4. Antriebsmodul (22) gemäß Anspruch 3, bei dem das Zentralrahmenbauteil (74) die Form eines sich nach oben öffnenden Kanals (82) aufweist.

5. Antriebsmodul (22) gemäß Anspruch 4, das innerhalb des Kanals (82) Verstärkungsbauteile (75), die sich in Querrichtung des Kanals (82) und in Längsrichtung des Förderers erstrecken, aufweist, wobei die Verstärkungsbauteile dort angeordnet sind, wo die Antriebseinheiten (26) mit dem Zentralrahmenbauteil verbunden sind.

6. Antriebsmodul (22) gemäß Anspruch 1, bei dem die Endrahmenbauteile (70, 72) so lang sind, daß sie im wesentlichen zwischen ein Paar sich in Längsrichtung erstreckender, lateral beabstandeter Zentralrahmenbalken (MFB) passen, und wobei das Zentralrahmenbauteil (74) angepasst ist, daß es auf die Zentralrahmenbalken (MFB) aufsitzt und sich lateral von diesen nach außen, im wesentlichen zu den Seitenrändern des Förderers, erstreckt.

7. Antriebsmodul (22) gemäß Anspruch 6, bei dem die Endrahmenbauteile (70, 92) obere Abschnitte (88, 90), die im Einsatz über die Zentralrahmenbalken (MFB) hochstehen, aufweisen, wobei jeder obere Abschnitt eine obere Fläche aufweist, und wobei das Zentralrahmenbauteil (74) eine obere Fläche im wesentlichen auf dem gleichen Niveau wie die oberen Flächen der Endrahmenbauteile (70, 72) aufweist, und wobei sich in Längsrichtung erstreckende Träger- und Führungsbalken (16) für Förderlatten (CS) mit den oberen Flächen der Endrahmenbauteile (90, 72) und den oberen Flächen des Zentralrahmenbauteils (94) verbunden sind.

8. Antriebsmodul (22) gemäß Anspruch 7, bei dem Fenster (W1, W2) zwischen Enden der Träger- und Führungsbalken (16), die mit jedem Endrahmenbauteil (70, 72) verbunden sind, und Enden der Träger- und Führungsbalken, die mit dem Zentralrahmenbauteil (74) verbunden sind, ausgebildet sind, wobei jedes dieser Fenster (W1, W2) von oben Zugang zu zweien der Antriebsbalken (94) bietet.

## Revendications

1. Module d'actionnement (22) pour un convoyeur à lattes à mouvement de va-et-vient, comprenant :
une paire d'éléments supports de bord espacés longitudinalement l'un de l'autre (70, 72), s'étendant chacun transversalement par rapport au convoyeur;
un élément support central (74) disposé longitudinalement entre les deux éléments supports de bord (70, 72), et s'étendant transversalement par rapport au convoyeur ;
une première paire d'unités d'actionnement de cylindres à piston (26) s'étendant longitudinalement par rapport au convoyeur, entre un premier desdits éléments supports de bord (70) et ledit élément support central (74), lesdites unités d'actionnement (26) présentant chacune une partie d'extrémité fixe raccordée à l'élément support central (74) et une partie mobile entre le premier élément support de bord (70) et l'élément support central (74) ;
une seconde paire d'unités d'actionnement de cylindres à piston (26), s'étendant longitudinalement par rapport au convoyeur, entre l'élément support central (74) et le second élément support de bord (72), lesdites unités d'actionnement (26) présentant chacune une partie d'extrémité fixe raccordée audit second élément support de bord (72) et une partie mobile entre le second élément support de bord (72) et l'élément support central (74) ;
quatre poutrelles d'actionnement transversales (94), une pour chacune des unités d'actionnement, deux desdites poutrelles d'actionnement transversales étant disposées entre le premier élément support de bord (70) et l'élément support central (74), et les deux autres desdites poutrelles d'actionnement transversales étant disposées entre l'élément support central (74) et le second élément support de bord (72) ; et
chacune desdites poutrelles d'actionnement transversales (94) étant raccordée à la partie mobile de l'une des unités d'actionnement séparées (26) avec laquelle elle est en relation.

2. Module d'actionnement (22) selon la revendication 1, dans lequel chacune des unités d'actionnement (26) comporte deux parties d'extrémité fixes opposées et une partie centrale mobile, l'une desdites portions d'extrémité fixes opposées étant raccordée à l'un desdits éléments supports de bord (70) tandis que l'autre est raccordée à l'élément support central (74).

3. , Module d'actionnement selon la revendication 1, dans lequel l'élément support central (74) comprend une partie supérieure (82) et une pluralité de supports d'appui raccordés à ladite partie supérieure, lesdits supports d'appui étant des éléments formant poutre qui s'étendent longitudinalement par rapport au convoyeur moyennant quoi, en service, au moins un appui est relié à chacun des supports d'appui et chacun des supports d'appui et des appuis reçoit une partie de latte du convoyeur à mouvement de va-et-vient (CS).

4. Module d'actionnement (22) selon la revendication 3, dans lequel l'élément support central (74) se présente sous la forme d'un canal ouvert sur le dessus (82).

5. Module d'actionnement (22) selon la revendication 4, comprenant des organes de renforcement (75) à l'intérieur du canal (82), qui s'étendent transversalement par rapport au canal (82) et longitudinalement par rapport au convoyeur, lesdits organes de renforcement étant placés à l'endroit où les unités d'actionnement (26) sont raccordées au dit élément support central.

6. Module d'actionnement (22) selon la revendication 1, dans lequel les éléments supports de bord (70, 72) sont d'une longueur telle qu'ils s'adaptent sensiblement entre une paire de poutrelles de support centrales espacées latéralement et s'étendant longitudinalement (MFB), et dans lequel l'élément support central (74) est adapté pour venir s'installer sur les poutrelles de support centrales (MFB) et pour s'étendre latéralement vers l'extérieur à partir de celles-ci, sensiblement jusqu'aux limites latérales du convoyeur.

7. Module d'actionnement (22) selon la revendication 6, dans lequel les éléments supports de bord (70, 92) présentent des parties supérieures (88, 90) qui, en service, se projettent par-dessus les poutrelles de support centrales (MFB), chaque partie supérieure présentant une surface supérieure, et dans lequel ledit élément support central (74) présente une surface supérieure qui se situe sensiblement au même niveau que les surfaces supérieures des éléments supports de bord (70, 72), et dans lequel des poutrelles de support et de guidage (16) s'étendant longitudinalement destinées aux lattes du convoyeur (CS) sont raccordées aux surfaces supérieures des éléments supports de bord (90, 72) et à la surface supérieure de l'élément support central (94).

8. Module d'actionnement (22) selon la revendication 7, dans lequel des fenêtres (W1, W2) sont formées entre les extrémités des poutrelles de support et de guidage (16) qui sont raccordées à chacun des éléments supports de bord (70, 72) et les extrémités des poutrelles de support et de guidage qui sont raccordées à l'élément support central (74), chacune de ces fenêtres (W1, W2) permettant d'accéder à deux des poutrelles d'actionnement (94), par le dessus.
